# EUROPÄISCHE PATENTANMELDUNG

(11) **EP 4 807 199 A1**
(43) Veröffentlichungstag der Anmeldung: **16.09.2026**
(21) Anmeldenummer: 26160817.8
(22) Anmeldetag: 26.02.2026
(51) Int. Cl.: F16B 13/12

(54) **DÜBEL**

(30) Priorität: 10.03.2025 DE 102025109028
(71) Anmelder: fischerwerke GmbH & Co. KG, 72178 Waldachtal (DE)
(72) Erfinder: Frey, Christian, 72250 Freudenstadt (DE)
(74) Vertreter: Suchy, Ulrich Johannes

(57) **Zusammenfassung**

Die Erfindung betrifft einen Dübel (1), der erste Drehsicherungsrippen (22) und zweite Drehsicherungsrippen (36) aufweist, die sich parallel zu einer Längsachse (2) erstrecken und hintereinander angeordnet sind. Die ersten Drehsicherungsrippen sind (22) einstückig mit einer aus einem ersten Kunststoff hergestellten Hülse (25) eines Endabschnitts (35) des Dübels (1) und die zweiten Drehsicherungsrippen (36) sind einstückig mit einem in Umfangsrichtung umlaufenden Ring (11) aus einem zweiten Kunststoff.

## Beschreibung

Die Erfindung betrifft einen Dübel mit den Merkmalen des Oberbegriffs des Anspruchs 1.

Aus der Druckschrift EP 3 842 646 B1 ist ein Zweikomponenten-Dübel bekannt, der aus zwei unterschiedlichen Kunststoffen hergestellt ist. Je zwei Spreizzungen des Dübels, die gemeinsam in einem Spreizbereich des Dübels angeordnet und durch das Einschrauben einer Schraube in einen Spreizkanals des Dübels aufspreizbar sind, sind aus dem ersten Kunststoff und aus dem zweiten Kunststoff hergestellt. Um zu verhindern, dass der in ein Bohrloch in einem Verankerungsgrund eingesetzte Dübel beim Einschrauben der Schraube mit der Schraube mitdreht, was das Einschrauben der Schraube in den Spreizbereich und somit das Aufspreizen verhindern würde, weist der Dübel mehrere Drehsicherungsrippen auf. Vier der Drehsicherungsrippen sind auf den beiden Spreizzungen aus dem ersten Kunststoff angeordnet, vier weitere Spreizzungen auf einem Ring an einem hinteren Ende des Dübels, der aus dem zweiten Kunststoff gebildet ist. Die vier weiteren Spreizzungen liegen radial innen auf einem hülsenförmigen Endabschnitt auf, der aus dem ersten Kunststoff gebildet ist. Wird der Dübel in ein Bohrloch in einem Vollbaustoff wie Beton eingesetzt, so stützen sich alle Drehsicherungsrippen an der Wand des Bohrlochs ab. Wird der Dübel dagegen in ein Bohrloch in einer mit einer Platte beplankten Hohlwand eingesetzt, beispielsweise in einer einlagig mit Gipskartonplatten beplankten Ständerwand, so greifen nur die hinteren Drehsicherungsrippen in die dünne Platte ein, wohingegen die auf den Spreizzungen angeordneten Drehsicherungsrippen keine Wirkung entfalten können, weil sie zu weit vorne angeordnet sind. Reißt der Ring beim Aufspreizen des Dübels aufgrund der nur dünnen Materialdicke des Rings auf und/oder löst er sich vom Endabschnitt, so kann es zum Mitdrehen des Dübels mit der Schraube kommen, was eine planmäßige Montage des Dübels verhindert.

Aufgabe der Erfindung ist es daher, einen Dübel zu schaffen, bei dem die Sicherung gegen ein ungewolltes Mitdrehen des Dübels beim Eindrehen einer Schraube verbessert ist.

Diese Aufgabe wird erfindungsgemäß durch einen Dübel mit den Merkmalen des Anspruchs 1 gelöst.

Der erfindungsgemäße Dübel erstreckt sich von einem vorderen Ende, mit dem voraus der Dübel in ein Bohrloch einbringbar ist, entlang einer Längsachse zu einem hinteren Ende. Das Bohrloch kann in einem Vollbaustoff, wie Beton oder Kalksandstein, oder in einem Hohlbaustoff, beispielsweise in einem Hochlochziegel oder einer mit einer Platte beplankten Ständerwand eingebracht sein. Das vordere Ende des Dübels weist insbesondere eine umlaufende Fase auf, die das Einstecken in das Bohrloch erleichtert. Außerdem ist das vordere Ende des Dübels insbesondere geschlossen, wodurch verhindert wird, dass beim Einstecken Bohrmehl in das Innere des Dübels gelangt. Die Längsachse erstreckt sich mittig im Dübel parallel zu einer Einbringrichtung, in die der Dübel mit seinem vorderen Ende voran planmäßig in das Bohrloch eingebracht wird. Der Dübel weist am hinteren Ende eine Öffnung auf, durch die eine Schraube in einen Spreizkanal einbringbar ist. Der Spreizkanal ist im Dübel angeordnet. Er erstreckt sich entlang der Längsachse zumindest in einen Spreizbereich des Dübels. Der Spreizbereich ist durch das Einbringen der Schraube nach außen, von der Längsachse weg verdrängbar und dadurch aufspreizbar. "Aufspreizbar" bedeutet, dass der Spreizbereich im Durchmesser vergrößert wird und durch das Aufspreizen gegen eine Wand eines Bohrlochs, in das der Dübel eingesetzt wurde, gedrückt wird oder, falls der Dübel in einem Hohlbaustoff eingesetzt wird, eine Platte einer Ständerwand oder einen Steg eines Hochlochziegels formschlüssig hintergreift. Insbesondere sind im Spreizbereich Spreizzungen angeordnet, die beim Einbringen der Schraube von der Längsachse weg nach außen verdrängt werden. Insbesondere sind mindestens vier Spreizzungen angeordnet, je zwei einander gegenüberliegend, jeweils in Umfangsrichtung um 90° versetzt zu den benachbarten Spreizzungen.

Der Dübel umfasst einen ersten Körper aus einem ersten Kunststoff und einen zweiten Körper aus einem zweiten, abweichenden Kunststoff, wobei sich die Abweichung auf die Farbgebung beschränken kann. Insbesondere weisen die Kunststoffe aber unterschiedliche Härten und/oder unterschiedliche Anteile an Fasern zur Verstärkung auf, wobei insbesondere der zweite Kunststoff weicher als das erste Kunststoff ist. Typische Kunststoffe, die für die Herstellung des erfindungsgemäßen Dübels verwendet werden können, sind beispielsweise Polyamid, Polypropylen und/oder Polyethylen, wobei andere Kunststoffe nicht ausgeschlossen sind.

Die beiden Körper sind miteinander verbunden. Die Verbindung der beiden Körper ist insbesondere dreh- und zug-/druckfest, so dass die Körper nach der Herstellung zum Transport, aber auch bei der Montage verbunden bleiben und eine Einheit bilden. Die Verbindung besteht zumindest in Teilbereichen des Dübels, beispielsweise hinter und/oder vor dem Spreizbereich, insbesondere hinter und vor dem Spreizbereich. In diesen Teilbereichen bleibt die Verbindung insbesondere auch nach dem Aufspreizen bestehen. Die Körper sind insbesondere formschlüssig verbunden, insbesondere durch das Erzeugen von Hinterschneidungen zwischen den Körpern. Um die Hinterschneidungen in einem der Körper zu erzeugen mit dem Kunststoff des anderen Körpers zu hintergreifen, wird der Dübel insbesondere in einem Mehrkomponentenspritzgussverfahren hergestellt, was vorteilhafterweise eine kostengünstige Massenproduktion des Dübels bei hoher Qualität ermöglicht. Insbesondere wird bei der Herstellung des Dübels im Spritzgussverfahren der erste Körper vor dem zweiten Körper hergestellt. Im Regelfall bildet der erste Körper einen Kern, der mit dem zweiten Körper umspritzt wird.

Der erste Körper weist hinter dem Spreizbereich einen Endabschnitt auf, mit einer in Umfangsrichtung geschlossenen Hülse und mit einem umlaufenden flanschartigen Kragen, der mit der Hülse verbunden ist und der radial zur Längsachse über die Hülse übersteht. Die Hülse weist insbesondere einen im Wesentlichen konstanten Innendurchmesser entlang der Längsachse auf, wobei gegebenenfalls nach innen ragende Rippen bei der Bestimmung des Innendurchmessers außeracht gelassen werden. Der flanschartige Kragen dient dazu, dass der Dübel nur bis zum Kragen in ein Bohrloch gesteckt wird. Der Kragen ist insbesondere einstückig mit der Hülse an einem hinteren Ende der Hülse angeordnet. Insbesondere bilden das hintere Ende des Kragens und/oder das hintere Ende der Hülse das hintere Ende des Dübels.

"Einstückig" meint hier und nachfolgend, dass die betreffenden Teile gemeinsam als ein Stück miteinander hergestellt sind, hier der Kragen mit der Hülse, einkomponentig, aus demselben Kunststoff. Insbesondere erfolgt die Herstellung gemeinsam als ein Teil beim Kunststoffspritzgießen des Dübels, das heißt beim selben Einspritzvorgang des flüssigen Kunststoffs in die Spritzgussform, also "in einem Schuss".

Der Dübel weist mindestens zwei zweite Drehsicherungsrippen auf, die sich parallel zur Längsachse erstrecken und die aus dem zweiten Kunststoff gebildet sind. Der hier verwendete Begriff "zweite Drehsicherungsrippen" ist gewählt, um zu verdeutlichen, dass diese Drehsicherungsrippen am zweiten Körper des Dübels angeordnet sind. Die nachfolgend beschriebenen ersten Drehsicherungsrippen sind dagegen am ersten Körper des Dübels angeordnet. Es sind mindestens zwei zweite Drehsicherungsrippen über den Umfang verteilt angeordnet, insbesondere sich bezüglich der Längsachse gegenüberliegend. Insbesondere sind vier zweite Drehsicherungsrippen in Umfangsrichtung gleichmäßig verteilt angeordnet. Die zweiten Drehsicherungsrippen sind insbesondere einstückig mit dem zweiten Körper. Die Drehsicherungsrippen sollen beim und nach dem Einführen des Dübels in das Bohrloch und/oder den Verankerungsgrund eingreifen, insbesondere formschlüssig, beispielsweise wenn der Dübel in einer Gipskartonplatte verwendet wird, und durch den Eingriff ein Mitdrehen mit der Schraube beim Verspreizen des Dübels verhindern.

Erfindungsgemäß sind der Hülse mindestens zwei erste Drehsicherungsrippen angeordnet, die sich parallel zur Längsachse erstrecken und die einstückig mit der Hülse sind. Es sind mindestens zwei erste Drehsicherungsrippen über den Umfang verteilt angeordnet, die sich insbesondere bezüglich der Längsachse gegenüberliegen. Insbesondere sind vier erste Drehsicherungsrippen in Umfangsrichtung gleichmäßig verteilt angeordnet, insbesondere in Umfangsrichtung jeweils um 90° zur benachbarten Drehsicherungsrippe versetzt.

Die Drehsicherungsrippen können bis zum flanschartigen Kragen reichen und einstückig mit ihm verbunden sein, so dass der Kragen, die Hülse und die ersten Drehsicherungsrippen eine feste Einheit bilden. Vorzugsweise sind die ersten Drehsicherungsrippen zum Kragen beabstandet, wodurch eine Beweglichkeit zwischen Kragen und den ersten Drehsicherungsrippen besteht, was eine flexible Anpassung des Endabschnitts im Bereich des Bohrlochmunds zulässt.

Durch die erfindungsgemäße Anordnung der ersten Drehsicherungsrippen ist sichergestellt, dass zumindest die ersten Drehsicherungsrippen in den Verankerungsgrund eingreifen und dass während der gesamten Montage eine ausreichend große Kraftübertragung zwischen Dübel und dem Verankerungsgrund über die ersten Drehsicherungsrippen vorhanden ist, da diese einstückig mit der Hülse und damit fest mit ihr verbunden sind. Wird der erfindungsgemäße Dübel in einer dünnen Gipskartonplatte einer einfach beplankten Ständerwand montiert, so greifen die ersten Drehsicherungsrippen in die Gipskartonplatte ein, da sie an der Hülse und somit nahe am Kragen angeordnet sind. Durch die einstückige Ausbildung der ersten Drehsicherungsrippen mit der Hülse und mit dem Kragen ist ein stabiler Endabschnitt geschaffen, der eine sichere und ausreichende Kraftübertragung zwischen Dübel und Platte zur Mitdrehsicherung während der gesamten Montage, insbesondere während des Aufspreizens gewährleistet. Die zweiten Drehsicherungsrippen können die Mitdrehsicherung unterstützen.

Die erste und die zweite Drehsicherungsrippe können in Längsrichtung gesehen auf gleicher Höhe angeordnet sein. Vorzugsweise sind die zweiten Drehsicherungsrippen in Einbringrichtung vor den ersten Drehsicherungsrippen angeordnet, wobei "vor" eine Überlappung in Längsrichtung nicht ausschließt. Insbesondere überlappen sich die ersten und die zweiten Drehsicherungsrippen in Längsrichtung nicht, sondern das hintere Ende der zweiten Drehsicherungsrippen liegt in Längsrichtung mit Abstand vor den vorderen Enden der ersten Drehsicherungsrippen. Hierdurch sind die Verdrehsicherungsrippen unabhängig voneinander verformbar, was eine flexible Anpassung an ein Bohrloch ermöglicht und ein Einbringen des Dübels in das Bohrloch erleichtert. Es ist aber in dicken Plattenmaterialien oder bei einer mehrlagigen Beplankung bei Gipskartonplatten zudem eine über die Dicke der Platten verteilte Krafteinleitung gewährleistet, was ein Mitdrehen auch bei weniger festen Materialien sicher verhindert.

Bei einer bevorzugten Ausgestaltungsform des erfindungsgemäßen Dübels liegen mindestens eine der ersten Drehsicherungsrippen und mindestens eine der zweiten Drehsicherungsrippen in einer gemeinsamen Axialebene. Insbesondere liegt jede der ersten Drehsicherungsrippen in einer gemeinsamen Axialebene mit einer der zweiten Drehsicherungsrippen. Das schließt nicht aus, dass mehrere erste und/oder zweite Drehsicherungsrippen in einer gemeinsamen Axialebene liegen. "Axialebene" meint eine Ebene, in der die Längsachse liegt. Die erste und die zweite Drehsicherungsrippe sind somit in einer Ebene hintereinander angeordnet, was das Einbringen des Dübels in ein Bohrloch erleichtert. Die vor der anderen angeordnete Drehsicherungsrippe formt beim Einbringen in ein Bohrloch eine Art Nut in den Verankerungsgrund, die axial hinter ihr liegende Drehsicherungsrippe folgt in dieser Nut.

Weiterhin ist bevorzugt, dass die zweiten Drehsicherungsrippen einstückig mit einem in Umfangsrichtung umlaufenden Ring aus dem zweiten Kunststoff hergestellt sind. Vorzugsweise umschließt der Ring den ersten Körper, ist also auf einer Mantelfläche des ersten Körpers angeordnet, insbesondere umspritzt. Mit "Ring" ist allgemein ein in Umfangsrichtung geschlossenes Gebilde gemeint, dass sich parallel zur Längsachse in einem Längsabschnitt nach vorne und hinten erstreckt, so dass in diesem Längsabschnitt ein gedankliches Umfahren des gesamten Umfangs auf dem Ring möglich ist. Bei einem Ring liegt beim Umfahren der hinterste Punkt eines vorderen Randes insbesondere vor dem vordersten Punkt eines hinteren Randes des Rings. Möglich und erfindungsgemäß ist aber auch, dass der hinterste Punkt des vorderen Randes hinter dem vordersten Punkt des hinteren Randes liegt, und zwar um maximal das 1,0-fache, vorzugsweise maximal das 0,5-fache, des Durchmessers des Rings. Der Ring muss weder ideal kreisförmig noch flach und eben im Sinne einer Erstreckung in Längsrichtung des Dübels sein, aber er ist über den Umfang geschlossen. Die Erstreckung des Rings parallel zur Längsachse beträgt vorzugsweise maximal das 1,5-fache, insbesondere maximal das 1,0-fache, seines Durchmessers, wobei mit "Durchmesser" hier sein minimaler Durchmesser ist. Insbesondere beträgt die Erstreckung maximal das 0,7-fache des Durchmessers, insbesondere maximal das 0,5-fache des Durchmessers, da bei einer zu großen Erstreckung das Aufspreizen der Spreizzungen behindert werden kann, was sich insbesondere bei einem gegebenenfalls beim Verspreizen angestrebten Verknoten des Spreizbereich in einem Hohlraum eines Hohlbaustoffs negativ auswirkt.

Vorzugsweise bildet der Ring einen hinteren Ring, vor dem mindestens ein weiterer vorderer Ring aus dem zweiten Kunststoff angeordnet ist. Der hintere und/oder der vordere Ring dient insbesondere zur Stabilisierung des Spreizbereichs, insbesondere umfasst und/oder verbindet der hintere und/oder der vordere Ring die nachfolgend beschriebenen Zungen. Insbesondere sind am vorderen Ring keine Drehsicherungselemente angeordnet, da sie in einem Hohlbaustoff keinen zusätzlichen Halt bringen aber ein Einführen des Dübels in den Verankerungsgrund bereits unnötig früh beim Einbringen in das Bohrloch erschweren würden. Zur Stabilisierung der Zungen kann zwischen dem hinteren und dem vorderen Ring mindestens ein weiterer Ring vorgesehen sein.

Bei einer bevorzugten Ausgestaltungsform des erfindungsgemäßen Dübels umfasst der erste Körper erste Zungen und der der zweite Körper zweite Zungen, wobei die ersten und/oder die zweiten Zungen als Spreizzungen durch und beim Einbringen einer Schraube in den Spreizkanal des Dübels von der Längsachse weg verdrängbar und dadurch nach außen aufspreizbar sind. Es können also sowohl die ersten als auch die zweiten Zungen oder nur die ersten bzw. nur die zweiten Zungen als Spreizzungen ausgebildet sein. Soweit die ersten oder zweiten Zungen nicht als Spreizzungen ausgebildet sind, bilden sie beispielsweise lediglich eine dünne Wand zwischen den zwei anderen Zungen, die als Spreizzungen ausgebildet sind. Die Zunge kann dann so ausgeführt sein, dass sie - im Gegensatz zu den Spreizzungen - nicht beim Einbringen eines Spreizelements aufgespreizt wird. Insbesondere sind sowohl die ersten als auch die zweiten Zungen als Spreizzungen ausgebildet.

Um möglichst viel Material in einem Bohrloch mit einer maximalen Anlagefläche verspreizen und die Zungen stabil ausführen zu können, liegen die ersten und zweiten Zungen in Umfangsrichtung vorzugsweise nebeneinander, insbesondere liegen sie unmittelbar aneinander an. Ein unmittelbares aneinander Anliegen wird insbesondere durch Mehrkomponentenspritzguss erreicht, bei dem zuerst die ersten Zungen mit dem ersten Körper gespritzt werden, die dann Teil des Kerns für das anschließende Spritzen der zweiten Zungen mit dem zweiten Körper bilden oder umgekehrt. Möglich ist auch eine Trennschicht zur Ausbildung einer Gleitfläche, wobei die Trennschicht insbesondere nicht größer als 0,1 mm ist. Die Zungen liegen mit Längsseiten aneinander an, wobei die Längsseiten nicht gerade sein müssen, sondern beispielsweise auch gezahnt oder wellig sein können. Insbesondere bilden die Anlageflächen oder Teile davon Gleitflächen aus, so dass die Zungen sich voneinander weg und/oder gleitend relativ zueinander bewegen können, insbesondere beim Verspreizen und/oder Verknoten des Dübels.

Weiterhin ist bevorzugt, dass die ersten Zungen als Spreizzungen ausgebildet sind und die zweiten Zungen, insbesondere als Spreizzungen, einstückig durch den Ring miteinander verbunden sind. Mit "der Ring" ist hier der hintere Ring gemeint. Die zweiten Zungen sind insbesondere zudem einstückig durch einen vorderen und/oder zudem einstückig durch einen weiteren mittleren Ring, der zwischen dem vorderen und dem hinteren Ring im Spreizbereich ausgebildet ist, miteinander verbunden. Die einstückige Verbindung der zweiten Zungen durch einen Ring oder durch mehrere Ringe ermöglicht eine stabile, kompakte Bauform des Dübels.

Vorzugsweise ist die maximale radiale Erstreckung der ersten Drehsicherungsrippen größer als die maximale radiale Erstreckung der zweiten Drehsicherungsrippen, wobei die radiale Erstreckung jeweils von der Längsachse aus gemessen ist. Diese Ausgestaltung des erfindungsgemäßen Dübels erleichtert ein Einführen des Dübels in ein Bohrloch, insbesondere dann, wenn die ersten und die zweiten Drehsicherungsrippen paarweise gemeinsam in einer Axialebene liegen.

Eine zum Dübel zugehörige Schraube, die geeignet ist, beim Einbringen der Schraube in den Spreizkanal den Dübel aufzuspreizen, bildet mit dem Dübel ein Befestigungssystem. Die Schraube muss hierzu einen Durchmesser aufweisen, so dass die Schraube in den Spreizkanal einschraubbar ist, ohne dass der Dübel aufreißt. Insbesondere weist sie einen Gewindeaußendurchmesser auf, der kleiner als ein Innendurchmesser der Hülse ist. Die Schraube muss aber einen Durchmesser aufweisen und lang genug sein, um das planmäßige Aufspreizen des Dübels zu bewirken. Insbesondere weist der Dübel einen Nenndurchmesser von 6 Millimeter und die Schraube einen Nenndurchmesser von 4,0 Millimeter bis 5,0 Millimeter auf. Die Schraube ist mindestens so lang, wie der Dübel.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines Ausführungsbeispiels erläutert.

Es zeigen:
- Figur 1: den erfindungsgemäßen Dübel in einer perspektivischen Darstellung;
- Figur 2: denselben Dübel in einer perspektivischen Darstellung, jedoch nur den ersten Körper;
- Figur 3: denselben Dübel in einer perspektivischen Darstellung in einem ersten Längsschnitt;
- Figur 4: denselben Dübel in einer perspektivischen Darstellung in einem zweiten Längsschnitt in einer um 90° versetzten Ebene;
- Figur 5: den Längsschnitt aus Figur 3, jedoch in einer nicht-perspektivischen Darstellung;
- Figur 6: den Längsschnitt aus Figur 4, jedoch in einer nicht-perspektivischen Darstellung;
- Figur 7: denselben Dübel in einer perspektivischen Darstellung mit einem Querschnitt in einer mit Pfeilen VII in den Figuren 5 und 6 dargestellten Ebene; und
- Figur 8: denselben Dübel in einer perspektivischen Darstellung mit einem Querschnitt in einer mit Pfeilen VIII in den Figuren 5 und 6 dargestellten Ebene.

Sämtliche Figuren sind maßstäblich. Insbesondere lassen sich somit Größenverhältnisse entnehmen.

Der in den Figuren dargestellte Dübel 1 erstreckt sich entlang einer Längsachse 2. Im Weiteren meinen die Begriffe "Länge" und "in Längsrichtung" stets die Erstreckung parallel zur Längsachse 2, und die Begriffe "in Umfangsrichtung" und "radial" beziehen sich ebenfalls auf die Längsachse 2. Ein vorderes Ende 3, mit dem voraus der Dübel 1 in eine Einbringrichtung in ein Bohrloch (nicht dargestellt) gesteckt werden kann, ist in den Figuren jeweils rechts beziehungsweise in den perspektivischen Darstellungen vorne, und entsprechend ein hinteres Ende 4 links beziehungsweise hinten zu finden. Der Dübel 1 ist am vorderen Ende 3 geschlossen und weist eine im Wesentlichen ebene Stirnseite 20 auf. In etwa die vordere Hälfte des Dübels 1 weist eine zylindrische Außenkontur auf. Die zylindrische Außenkontur geht mit einer Fase 21 in die Stirnseite 20 über. In der hinteren Hälfte ist ein Endabschnitt 35 mit einer in Umfangsrichtung geschlossenen Hülse 25 angeordnet, deren Außenkontur sich nach hinten leicht konisch erweitert. Der Endabschnitt 35 weist zudem einen umlaufenden, flanschartigen Kragen 23 auf, der mit der Hülse 25 einstückig ausgebildet ist. Der Kragen 23 steht radial zur Längsachse 2 über die Hülse 25 über und bildet mit dem hinteren Ende der Hülse 25 das hintere Ende 4 des Dübels 1. Der flanschartige Kragen 23 sorgt in bekannter Weise dafür, dass der Dübel 1 nicht zu tief in ein Bohrloch geschoben werden kann. An der Hülse 25 sind außerdem vier erste Drehsicherungsrippen 22 jeweils um 90° versetzt über den Umfang verteilt angeordnet, die in an sich bekannter Weise einer Verdrehung des Dübels 1 beim Einbringen einer Schraube (nicht dargestellt) entgegenwirken. Diese ersten Drehsicherungsrippen 22 sind einstückig mit der Hülse 25 und gemeinsam mit der Hülse 25 aus einem ersten Kunststoff hergestellt, hier aus Polyamid. Die Hülse 25, der Kragen 23 und die ersten Drehsicherungsrippen 22 bilden gemeinsam eine stabile Einheit.

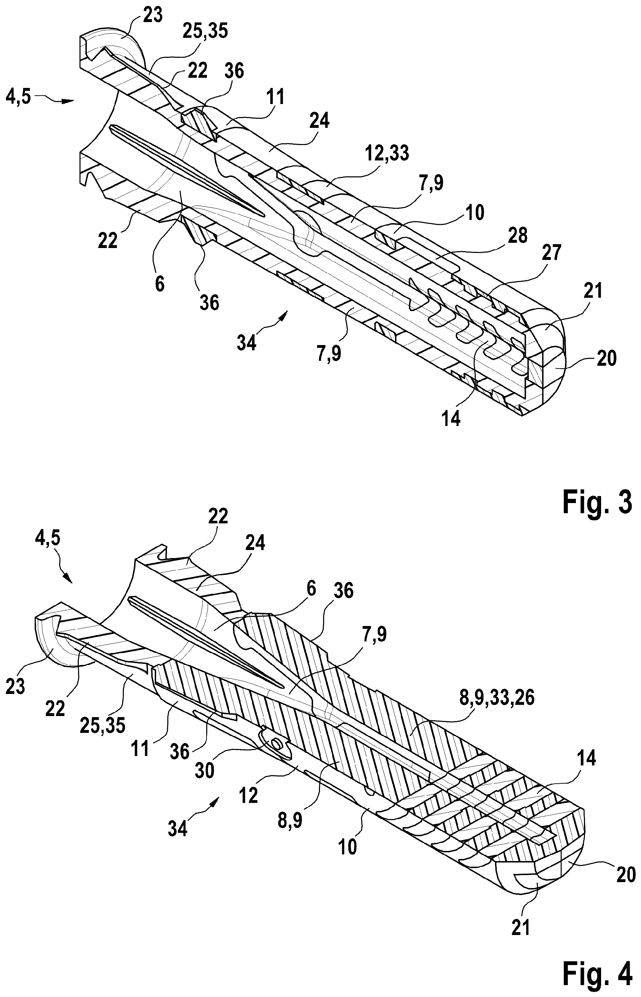

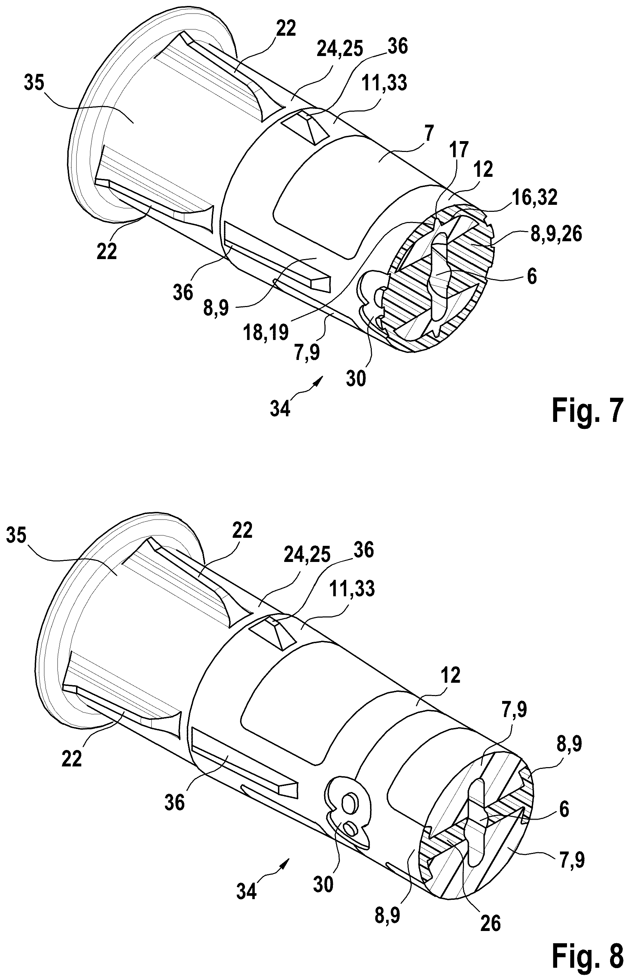

Wie in den Figuren 3 bis 8 ersichtlich ist, weist das hintere Ende 4 außerdem eine Öffnung 5 zum Einbringen der Schraube auf, von der aus sich entlang der Längsachse 2 ein Spreizkanal 6 im Innern der Hülse 25 und durch einen Spreizbereich 34 des Dübels 1 bis fast bis zum vorderen Ende 3 erstreckt. Der Spreizkanal 6 ist etwa über das hintere Achtel des Dübels 1, das die Hülse 25 bildet, im Wesentlichen zylindrisch, verjüngt sich dann im Spreizbereich 34 bis etwa zur Mitte des Dübels 1 und weist in der vorderen Hälfte einen konstanten, in etwa schlitzförmigen Querschnitt mit einer zentralen kreisförmigen Erweiterung auf, wie in den Figuren 7 und 8 erkennbar ist.

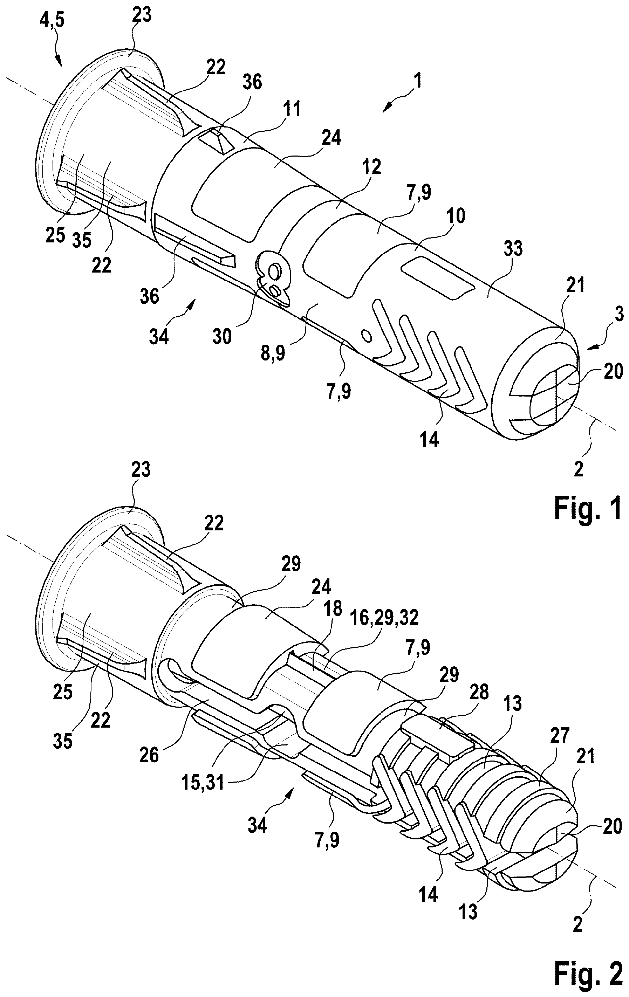

In der Figur 2 ist lediglich einer der beiden Körper des Dübels 1 dargestellt, nämlich der erste Körper 24 aus dem ersten Kunststoff. Der erste Körper 24 umfasst den Kragen 23 und die einstückig mit dem Kragen 23 verbundene hintere Hülse 25, die sowohl die Außen- als auch die Innenkontur des Dübels 1 in diesem Bereich bildet und auf der die vier ersten Drehsicherungsrippen 22 über den Umfang verteilt einstückig angeordnet sind. An die Hülse 25 schließen sich vorne zwei erste Zungen 7 an, die nach ihrer Funktion Spreizzungen 9 und als solche ausgebildet sind. Die Spreizzungen 9 sind durch einen Längsschlitz 26 getrennt. An ihrem vorderen Ende 3 gehen die ersten Zungen 7 jeweils in Halbschalen 13 über, die auch als Teil der Spreizzungen 9 aufgefasst werden können, hier jedoch begrifflich als separate Elemente verstanden werden. Die beiden Halbschalen 13 sind durch mehrere Verbindungselemente 14 derart verbunden, dass sie sich beim Einschrauben einer Schraube voneinander wegbewegen können, jedoch weniger leicht als die Spreizzungen 9. Die Halbschalen 13 sollen sich so an unterschiedliche Schraubendurchmesser anpassen können, der Schraube aber auch wie eine Mutter festen Halt geben. Dazu sind die Verbindungselemente 14 elastisch und plastisch durch das erste Material und durch ihre Form entsprechend gestaltet, so dass eine Bewegung der Halbschalen 13 voneinander weg beim Einführen der Schraube zwischen die Halbschalen 13 begünstig wird. Die Form ist hier in der Seitenansicht pfeilförmig und als solche auch sichtbar für den Verwender. Alternativ könnte die Form beispielsweise auch U-, X-förmig oder als Filmscharnier mit einem in Längsrichtung gesehen U-förmigen Querschnitt ausgeführt sein und/oder die Proportionen verändert werden. Auch kann die Form der Verbindungselemente 14 weiter innen von der Form weiter außen variieren, so dass der äußerlich sichtbare Teil einen großen Gestaltungsspielraum für die ästhetische Gestaltung des Dübels 1 bietet. Im Ausführungsbeispiel sind die Verbindungselemente 14 als vier eng aufeinanderfolgende und nach vorne gerichtete Pfeile sichtbar und verkörpern dadurch ein kraftvolles Design. Die Halbschalen 13 weisen zudem mehrere über die Länge verteilte und sich im Umfangrichtung erstreckende Rippen 27 auf, auf deren Funktion im Weiteren noch eingegangen wird. Weiterhin weisen die Halbschalen 13 jeweils einen quaderförmigen Block 28 auf, der sich in Längsrichtung erstreckt, 90° versetzt zu den Verbindungselementen 14 ist und die Rippen 27 radial leicht überragt.

Der Dübel 1 wird in einem Zweikomponentenspritzgussverfahren hergestellt. Bei der Herstellung des Dübels 1 wird zunächst der erste Körper 24 aus dem ersten Kunststoff einstückig als ein Teil gespritzt und dieser dann auf dem Werkzeugkern in ein zweites Formnest gebracht, wo der erste Körper 24 mit einem zweiten Körper 33 aus einem zweiten Kunststoff, hier Polypropylen, umspritzt wird. Auch der zweite Körper 33 ist einstückig als ein Teil hergestellt.

Die ersten Zungen 7 werden vorne von einem vorderen Ring 10, in der Mitte von einem mittleren Ring 12 und hinten von einem hinteren Ring 11 umschlossen. Die Ringe 10, 11, 12 sind Teil des zweiten Körpers 33 und bilden, indem sie den ersten Körper 24 umschließen, jeweils eine geschlossene Umfangsfläche des Dübels 1. Zur Anordnung der Ringe 10, 11, 12 weisen die ersten Zungen 7 umlaufende Ausnehmungen 29 auf, wie es in Figur 2 gut erkennbar ist. Die zweiten Zungen 8 sind im Bereich des Längsschlitzes 26 durch die Ringe 10, 11, 12 verbunden. Die zweiten Zungen 8 sind ebenfalls nach ihrer Funktion Spreizzungen 9 und als solche ausgebildet. Die zweiten Zungen 8 reichen radial vom Spreizkanal 6 bis zur Außenkontur. Damit liegen die ersten und zweiten Zungen 7, 8 an Längsseiten aneinander an. Sowohl die Ringe 10, 11, 12 als auch die zweiten Zungen 8 schließen radial bündig mit dem ersten Körper 24 beziehungsweise den ersten Zungen 7 ab, so dass sich eine im Wesentlichen glatte Oberfläche ergibt. Im Ausführungsbeispiel gehen an der Außenkontur die Ringe 10, 11, 12 mit engen Radien in die zweiten Zungen 8 über. Um eine andere ästhetische Gestaltung zu erreichen, könnten diese Übergänge größer dimensioniert und/oder kantig gewählt sowie die Proportionen leicht verändert werden.

Die gemeinsame Erstreckung der ersten und zweiten Zungen 7, 8 parallel zur Längsachse 2 beträgt etwa das 2,5-Fache des minimalen Durchmessers im Bereich der Zungen 7. Der Abstand des vorderen zum mittleren Ring 10, 12 beträgt etwa das 0,6-Fache und der Abstand des mittleren zum hinteren Ring 11, 12 etwa das 0,7-Fache des minimalen Durchmessers im jeweiligen Bereich. Die Erstreckung des mittleren Rings 12 parallel zur Längsachse 2 beträgt etwa das 0,5-Fache seines Durchmessers. Beim hinteren Ring 11 ist es etwa das 0,35-Fache.

Im Bereich der Halbschalen 13 überdeckt der zweite Körper 33 die Rippen 27 vollständig, so dass diese nicht sichtbar sind und sich durch die Verzahnung ein Formschluss zwischen den beiden Körpern 24, 33 in Längsrichtung ergibt. Zusätzlich auch in Umfangsrichtung wirkt formschlüssig der Block 28, der als sichtbares Element einen Teil der Außenkontur bildet und zusätzlich eine abstützende Wirkung beim Spritzen des Dübels 1 hat. Der Block 28 könnte alternativ beispielsweise auch elliptisch, rautenförmig, wellenförmig, sternförmig oder dergleichen geformt sein und/oder die Proportionen verändert werden. Somit kann er ebenfalls für die ästhetische Gestaltung genutzt werden. Der zweite Körper 33 ist auch zwischen den Verbindungselementen 14 angeordnet und reicht zwischen den Halbschalen 13 radial bis zum Spreizkanal 6. Auch der zweite Körper 33 hat somit eine verbindende Wirkung für die beiden Halbschalen 13, allerdings vergleichsweise untergeordnet, da Polypropylen deutlich leichter verformbar ist als Polyamid. Am vorderen Ende 3 des Dübels 1 reicht der zweite Körper 33 bis zur Stirnseite 20 und sorgt dafür, dass der Spreizkanal 6 vorne geschlossen ist. Das hat den Vorteil, dass eventuell vorhandenes Bohrmehl beim Einschieben des Dübels 1 in ein Bohrloch nicht ins Innere des Dübels 1 dringt, was das Einschrauben einer Schraube behindern könnte.

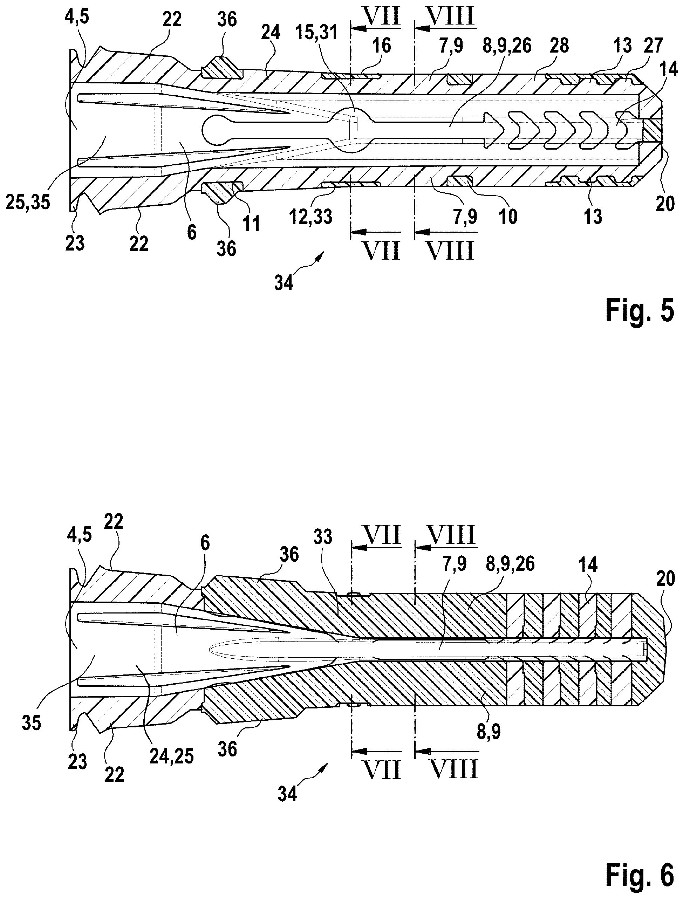

Im Bereich des mittleren Rings 12 ist auf beiden zweiten Zungen 8 eine "8" als Größenangabe 30 eingeprägt, bildet also eine leichte Vertiefung. Dahinter ist jeweils eine zweite, längere Drehsicherungsrippe 36 auf dem zweiten Körper 33 angeordnet, die mit ihrem hinteren Ende einstückig mit dem hinteren Ring 11 ist und in Flucht mit einer der ersten Drehsicherungsrippen 22 an der hinteren Hülse 25 steht. In Umfangsrichtung um 90° versetzt dazu sind zwei weitere kürzere zweite Drehsicherungsrippen 36 auf dem hinteren Ring 11 angeordnet, die ebenfalls in Flucht mit den beiden anderen ersten Drehsicherungsrippen 22 an der hinteren Hülse 25 sind. Die vier zweiten Drehsicherungsrippen 36 erstrecken sich jeweils parallel zur Längsachse 2 und sind aus dem zweiten Kunststoff gebildet. Die zweiten Drehsicherungsrippen 36 sind vor und mit Abstand zu den ersten Drehsicherungsrippen 22 angeordnet und die ersten Drehsicherungsrippen 22 vor und mit Abstand zum Kragen 23, wodurch sich die Drehsicherungsrippen 22, 36 unabhängig voneinander an den jeweiligen Verankerungsgrund anpassen können. Je eine erste Drehsicherungsrippe 22 und eine zweite Drehsicherungsrippe 36 sind in einer gemeinsamen Axialebene angeordnet, was in den Schnittdarstellungen der Figuren 3 bis 6 gut zu erkennen und oben mit "in Flucht" bezeichnet ist. Dies begünstigt das Einbringen des Dübels 1 in ein Bohrloch. In den Figuren 5 und 6 ist zudem gut zu erkennen, dass die maximale radiale Erstreckung der ersten Drehsicherungsrippen 22 größer als die maximale radiale Erstreckung der zweiten Drehsicherungsrippen 36 ist, wobei die radiale Erstreckung jeweils von der Längsachse 2 aus gemessen ist.

Beim Einführen einer Schraube als Spreizelement spreizt diese alle vier Spreizzungen 9 radial nach außen. An den Kontaktflächen zwischen den beiden Körpern 24, 33 besteht keine nennenswerte Verbindung, so dass Gleitflächen gebildet sind. Dadurch können sich die Zungen 7, 8, die im unverspreizten Zustand unmittelbar aneinander anliegen, voneinander weg und/oder gleitend relativ zueinander bewegen. Dabei wirken die Ringe 10, 11, 12 der Spreizbewegung etwas entgegen. In einem Vollbaustoff hat dies jedoch kaum Auswirkungen, da durch die Schraube und die Bohrlochinnenwand als Widerlager sehr hohe Kräfte entwickelt werden. In einem Plattenbaustoff, bei dem der vordere Teil des Dübels 1 bis beispielsweise zum hinteren Ring 11 in einen Hohlraum ragt, haben die Ringe 10, 11, 12 dagegen die Funktion, dass die Spreizzungen 9 beim Einschrauben der Schraube etwas zusammengehalten werden und damit die Gefahr, dass die Schraube schräg aus dem Dübel 1 austritt, verringert wird. Anders ausgedrückt bleibt die Geometrie und damit die Führungsfunktion des Spreizkanals 6 besser erhalten. Damit ist gewährleistet, dass die Schraube entlang der Längsachse 2 zwischen die Halbschalen 13 gelangt. Wenn die Schraube vollständig eingeschraubt ist und mit ihrem Kopf auf dem Befestigungsgegenstand oder dem Kragen 23 aufsitzt, wird durch ein weiteres Drehen der Schraube ein gewindetriebartiges Heranziehen der Halbschalen 13 in Richtung des hinteren Endes 4 erreicht. In diesem Zustand sind die Spreizzungen 9 wie bereits ausgeführt, bereits etwas verspreizt. Durch das Zusammenziehen des Dübels 1 in Längsrichtung knicken die Spreizzungen 9 kniehebelartig aus. Dazu weisen die ersten Zungen 7 im Bereich des mittleren Rings 12 eine innere Kerbe 31, die einen ersten Reduktionsbereich 15 bildet, und eine äußere Abflachung 32, die einen zweiten Reduktionsbereich 16 bildet, auf. Die innere Kerbe 31 ist gewölbt, erstreckt sich als Sekante durch die Mantelfläche des Dübels 1 und ist in Längsrichtung des Dübels 1 gemessen kürzer als der mittlere Ring 12. Die Abflachung 32 erstreckt sich ebenfalls als Sekante durch die Mantelfläche des Dübels 1, ist aber genauso lang wie der mittlere Ring 12. Aufgesetzt auf die Abflachung 32 erstreckt sich in Längsrichtung eine Schneide 18, die eine Nut 19 im mittleren Ring 12 ausfüllt, wie aus den Figuren 2 und 7 deutlich wird. Die Nut 19 erstreckt sich über die gesamte Länge des mittleren Rings 12 und bildet eine Sollbruchstelle 17, die ein Aufreißen des mittleren Rings 12 bei größeren Kräften provoziert. Das Aufreißen kann bereits vor dem beschriebenen Zusammenziehen erfolgen oder in dessen Zuge. Sobald der mittlere Ring 12 nicht mehr geschlossen ist, können alle Spreizzungen 9 deutlich leichter verspreizen, ausknicken und/oder verknoten.

### Bezugszeichenliste

- 1: Dübel
- 2: Längsachse
- 3: vorderes Ende
- 4: hinteres Ende
- 5: Öffnung
- 6: Spreizkanal
- 7: erste Zunge
- 8: zweite Zunge
- 9: Spreizzunge
- 10: vorderer Ring
- 11: hinterer Ring
- 12: mittlerer Ring
- 13: Halbschale
- 14: Verbindungselement
- 15: erster Reduktionsbereich
- 16: zweiter Reduktionsbereich
- 17: Solbruchstelle
- 18: Schneide
- 19: Nut
- 20: Stirnseite
- 21: Fase
- 22: erste Drehsicherungsrippe
- 23: Kragen
- 24: erster Körper
- 25: Hülse
- 26: Längsschlitz
- 27: Rippe
- 28: Block
- 29: Ausnehmung
- 30: Größenangabe
- 31: innere Kerbe
- 32: Abflachung
- 33: zweiter Körper
- 34: Spreizbereich
- 35: Endabschnitt
- 36: zweite Drehsicherungsrippe

## Patentansprüche

1. Dübel (1),
der sich von einem vorderen Ende (3), mit dem voraus der Dübel (1) in ein Bohrloch einbringbar ist, entlang einer Längsachse (2) zu einem hinteren Ende (4) erstreckt, wobei der Dübel (1) am hinteren Ende (4) eine Öffnung (5) aufweist, durch die eine Schraube in einen Spreizkanal (6) einbringbar ist, der im Dübel (1) angeordnet ist, wobei sich der Spreizkanal (6) entlang der Längsachse (2) in einen Spreizbereich (34) erstreckt, der durch das Einbringen der Schraube nach außen, von der Längsachse (2) weg verdrängbar und dadurch aufspreizbar ist,
wobei der Dübel (1) einen ersten Körper (24) aus einem ersten Kunststoff und einen zweiten Körper (33) aus einem zweiten, abweichenden Kunststoff umfasst, wobei die Körper (24, 33) miteinander verbunden sind,
wobei der erste Körper (24) hinter dem Spreizbereich (34) einen Endabschnitt (35) aufweist, mit einer in Umfangsrichtung geschlossenen Hülse (25) und mit einem umlaufenden flanschartigen Kragen (23), der mit der Hülse (25) verbunden ist und der radial zur Längsachse (2) über die Hülse (25) übersteht,
und wobei der Dübel (1) mindestens zwei zweite Drehsicherungsrippen (36) aufweist, die sich parallel zur Längsachse (2) erstrecken und die aus dem zweiten Kunststoff gebildet sind,
**dadurch gekennzeichnet, dass**
an der Hülse (25) mindestens zwei erste Drehsicherungsrippen (22) angeordnet sind, die sich parallel zur Längsachse (2) erstrecken und die einstückig mit der Hülse (25) sind.

2. Dübel (1) nach Anspruch 1, **dadurch gekennzeichnet, dass** die zweiten Drehsicherungsrippen (36) vor den ersten Drehsicherungsrippen (22) angeordnet sind.

3. Dübel (1) nach einem oder mehreren der vorstehenden Ansprüche, **dadurch gekennzeichnet, dass** mindestens eine der ersten Drehsicherungsrippen (22) und mindestens eine der zweiten Drehsicherungsrippen (36) in einer gemeinsamen Axialebene liegen.

4. Dübel (1) nach einem oder mehreren der vorstehenden Ansprüche, **dadurch gekennzeichnet, dass** die zweiten Drehsicherungsrippen (36) einstückig mit einem in Umfangsrichtung umlaufenden Ring (11) aus dem zweiten Kunststoff hergestellt sind.

5. Dübel (1) nach Anspruch 4, **dadurch gekennzeichnet, dass** der Ring (11) den ersten Körper (24) umschließt.

6. Dübel (1) nach einem der Ansprüche 4 oder 5, **dadurch gekennzeichnet, dass** die Erstreckung des Rings (11) parallel zur Längsachse (2) maximal das 1,5-fache, insbesondere maximal das 1,0-fache und insbesondere maximal das 0,7-fache, seines Durchmessers beträgt.

7. Dübel (1) nach einem oder mehreren der vorstehenden Ansprüche, **dadurch gekennzeichnet, dass** der Ring (11) einen hinteren Ring bildet, vor dem mindestens ein weiterer vorderer Ring (10) aus dem zweiten Kunststoff angeordnet ist.

8. Dübel (1) nach einem oder mehreren der vorstehenden Ansprüche, **dadurch gekennzeichnet, dass** der erste Körper (24) erste Zungen (7) umfasst und dass der zweite Körper (33) zweite Zungen (8) umfasst, wobei die ersten Zungen (7) und/oder die zweiten Zungen (8) als Spreizzungen (9) durch und beim Einbringen einer Schraube in den Spreizkanal (6) des Dübels (1) von der Längsachse (2) weg verdrängbar und dadurch nach außen aufspreizbar sind.

9. Dübel (1) nach Anspruch 8, **dadurch gekennzeichnet, dass** die ersten Zungen (7) und zweiten Zungen (7) in Umfangsrichtung nebeneinander liegen, insbesondere unmittelbar aneinander anliegen.

10. Dübel (1) nach Anspruch 8 oder Anspruch 9, **dadurch gekennzeichnet, dass** die ersten Zungen (7) als Spreizzungen (9) ausgebildet sind und die zweiten Zungen (8), insbesondere als Spreizzungen (9), einstückig durch den Ring (11) miteinander verbunden sind.

11. Dübel (1) nach einem oder mehreren der vorstehenden Ansprüche, **dadurch gekennzeichnet, dass** die maximale radiale Erstreckung der ersten Drehsicherungsrippen (22) größer als die maximale radiale Erstreckung der zweiten Drehsicherungsrippen (36) ist, wobei die radiale Erstreckung jeweils von der Längsachse (2) aus gemessen ist.

12. Dübel (1) nach einem oder mehreren der vorstehenden Ansprüche, **dadurch gekennzeichnet, dass** die ersten Drehsicherungsrippen (22) vom Kragen (23) beabstandet sind.

13. Befestigungssystem mit einem Dübel (1) nach einem oder mehreren der vorstehenden Ansprüche und mit einer Schraube, die geeignet ist, beim Einbringen der Schraube in den Spreizkanal (6) den Dübel (1) aufzuspreizen.
